# EUROPEAN PATENT APPLICATION

(11) **EP 3 503 481 A1**
(43) Date of publication of application: **26.06.2019**
(21) Application number: 17841383.7
(22) Date of filing: 02.08.2017
(51) Int. Cl.: H04L 12/717, H04L 12/70, H04M 3/00, H04W 24/02

(54) **SLICE ASSIGNMENT METHOD**

(30) Priority: 17.08.2016 JP 2016159925
(71) Applicant: NTT DOCOMO, INC., Chiyoda-ku Tokyo 100-6150 (JP)
(72) Inventor: SHIMOJOU, Takuya, Tokyo 100-6150 (JP); IWASHINA, Shigeru, Tokyo 100-6150 (JP); SHIMIZU, Masayoshi, Tokyo 100-6150 (JP)
(74) Representative: Hoffmann Eitle
(86) International application number: PCT/JP2017/028103
(87) International publication number: WO 2018/034156

(57) **Abstract**

A storage request accepting unit 11 acquires correspondence information in which a service, a slice, and context information are associated with each other. A status acquiring unit 13 acquires positional information of a UE 130 and identifies staying information from the positional information. An assignment unit 14 assigns a slice corresponding to a service used by the UE 130 and context information represented by the correspondence information. In this case, a slice management device 10 assigns a slice to a service in accordance with the context information such as a staying status or the like of the UE 130, and accordingly, a slice assigned to the service can be dynamically changed.

## Description

### Technical Field

The present invention relates to a method of assigning slices that are virtual networks generated on a network infrastructure.

### Background Art

In a network system using a conventional virtualization technology, by using a virtualization technology disclosed in Non-Patent Literature 1, hardware resources are virtually divided, and a slice that is a virtual network logically generated on a network infrastructure is generated. Then, by respectively assigning services to slices, the services can be provided using networks of independent slices. In this way, in a case in which slices are respectively assigned to services having various required conditions, required conditions of individual services can be easily satisfied, and a signaling process and the like thereof can be reduced.

### Citation List

### Non Patent Literature

[Non-Patent Literature 1] Nakao Akihiro, "Virtualized node project virtualization technology targeting on new-generation network", "online", June 2010, National Institute of Information and Communications Technology, "retrieved on August 4, 2016", the Internet <http://www.nict.go.jp/publication/NICT-News/1006/01.html>

### Summary of Invention

### Technical Problem

However, when a slice is uniquely assigned to a service, in a case in which a status of a user using the service changes, it is difficult to constantly assign a slice that is appropriate for the service.

The present invention is realized in consideration of the description presented above, and an object thereof is to provide a slice assignment method in which a slice assigned to a service is dynamically changed.

### Solution to Problem

In order to achieve the objects described above, a slice management method according to one aspect of the present invention is a slice assignment method executed by a device assigning a slice that is a virtual network generated on a network infrastructure to a service using the virtual network, the slice assignment method comprising: a correspondence information acquiring step of acquiring correspondence information that is information in which the service, the slice of an assignment destination of the service, and status information that is information representing a status of a terminal are associated with each other; a status acquiring step of acquiring the status information of the terminal; and an assignment step of assigning the slice corresponding to the service used by the terminal and the status information acquired in the status acquiring step on the basis of the correspondence information acquired in the correspondence information acquiring step.

According to the slice assignment method described above, a slice is assigned to a service in accordance with a status of a terminal, and accordingly, a slice assigned to a service can be dynamically changed.

### Advantageous Effects of Invention

A slice assigned to a service can be dynamically changed.

### Brief Description of Drawings

Fig. 1 is a diagram illustrating the configuration of a system according to an embodiment of the present invention.
Fig. 2 is a diagram illustrating a correspondence relation between slices and resources.
Fig. 3 is a block diagram of a slice management device according to an embodiment of the present invention.
Fig. 4 is a diagram illustrating a correspondence information table.
Fig. 5 is a diagram illustrating a user use service table.
Fig. 6 is a hardware configuration diagram of a slice management device.
Fig. 7 is a sequence diagram illustrating a process of establishing a new bearer with being triggered upon acquisition of new correspondence information.
Fig. 8 is a sequence diagram illustrating a process of establishing a new bearer with being triggered upon a status change in a terminal.

### Description of Embodiments

Hereinafter, a slice assignment method according to an embodiment will be described in detail with reference to the drawings. In description of the drawings, the same reference sign will be assigned to the same element, and duplicate description thereof will be omitted.

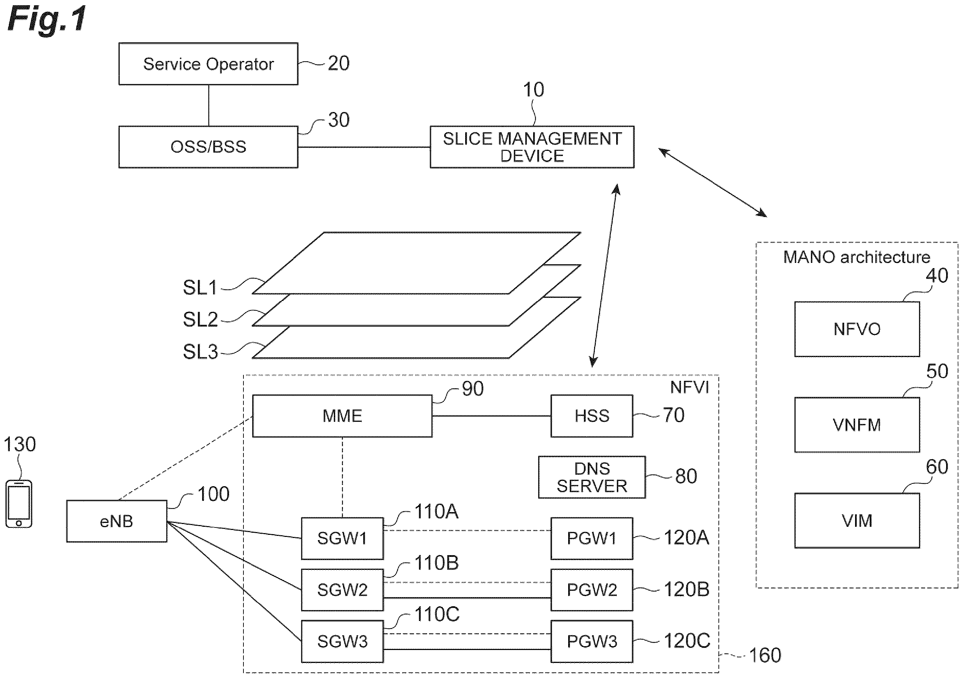

Fig. 1 is a diagram illustrating the configuration of a system including a slice management device 10 (device) according to this embodiment. The system is a system that assigns a slice that is a virtual network to a service using the virtual network generated on a network infrastructure. A slice is a virtual network or a service network that is logically generated on a network infrastructure by virtually dividing resources of links and nodes of a network device and combining the divided resources, and slices divide the resources and thus do not interfere with each other. A service is a service using network resources such as a communication service (a dedicated line service or the like) or an application service (moving image distribution or a service using a sensor device such as an embedded device).

As illustrated in Fig. 1, the system is configured to include a slice management device 10 ,a service operator (SO) 20, an operations support system/business support system (OSS/BSS) 30, an NFVO 40, a VNFM 50, a virtualized infrastructure management (VIM) 60, a home subscriber server (HSS) 70, a domain name system (DNS) server 80, a mobility management entity (MME) 90, an eNB 100, a serving gateway (SGW) 110, a packet data network gateway (PGW) 120, and a user equipment (UE) 130. Among these, the NFVO 40, the VNFM 50, and the VIM 60 are management & orchestration (MANO) architectures.

Such constituent elements configure a core network of the system. Constituent elements required to transmit/receive information to/from each other are connected using a wire or the like, and thus the transmission/reception of information can be performed.

The system according to this embodiment provides a communication function for a mobile communication terminal using a virtual server that operates on a virtual machine realized on a physical server. In other words, the system is a virtual mobile communication network. The virtual machine executes a communication process according to the communication function, and thus the communication function is provided for the mobile communication terminal.

The slice management device 10 is a node that performs service management (association between a slice and a service) in the system and gives an instruction relating to a communication function of the system. In addition, the slice management device 10 can be operated by a communication company relating to the system.

The service operator (SO) 20 is a device requesting a service and, for example, is a terminal device (for example, a personal computer or the like) of a company providing services for various users using a virtual network.

The OSS/BSS 30 is a device that accepts a service request from the SO 20 and transmits information based on the request to the slice management device 10. This OSS/BSS 30 associates a service parameter used for identifying a service that is a target for the service request, a slice to be associated with the service parameter (a slice ID representing the slice), and context information with each other and transmits associated information to the slice management device 10. Here, the context information is information that represents a status of a user and, for example, is information representing a staying status (staying time) of a user. In addition, the OSS/BSS 30 may receive correspondence information from the SO 20 and transmit the correspondence information to the slice management device 10.

The NFVO 40 is a total management node (a functional entity) managing a total virtual network (slice) built on an NFVI 160 that is a physical resource. The NFVO 40 receives an instruction from a device instructing generation of a slice and performs a process according to the instruction. The NFVO 40 performs management over the total virtualization network built using the infrastructure and physical resources of a mobile communication network of a communication service. The NFVO 40 realizes a communication service provided by a virtual network at an appropriate place through the VNFM 50 and the VIM 60. For example, the NFVO 40 performs management of a lifecycle of a service (more specifically, for example, generation, update, scale control, and event collection), management of distribution, reservation, and assignment of resources over the entire mobile communication network, and management of service instances and management of policies (more specifically, for example, reservation and assignment of resources and optimal arrangement based on geography, laws, and the like).

The VNFM 50 is a virtual communication function managing node (a functional entity) that adds a function relating to a service to the NFVI 160 that becomes physical resources (node). A plurality of VNFMs 50 may be disposed in the system.

The VIM 60 is a physical resource managing node (a functional entity) managing each physical resource (node). More specifically, the VIM 60 performs management of assignment, update, and recovery of resources, association between physical resources and virtualized networks, and management of lists of hardware resources and SW resources (hypervisors). Generally, the VIM 60 performs management for each data center (station). The management of physical resources is performed in a system according to the data center. As management systems of data centers (a system for mounting management resources), there are types of OPENSTACK, vCenter, and the like. Generally, the VIM 60 is disposed for each management system of the data center. In other words, a plurality of VIMs 60 respectively managing physical resources of the NFVI 160 in different systems are included. In addition, units of physical resources managed in different management systems may not necessarily be units of data centers.

In addition, the NFVO 40, the VNFM 50, and the VIM 60 are realized by executing programs on a physical server device (here, the realization is not limited on virtualization but may be realized on virtualization after a management system is divided). The NFVO 40, the VNFM 50, and the VIM 60 may be either realized by different physical server apparatuses or realized by the same server apparatus. The NFVO 40, the VNFM 50, and the VIM 60 (programs for realizing them) may be provided from different vendors.

When a slice generation request is received, the NFVO 40 requests the VIM 60 to secure resources for slices (slices SL1, SL2, and the like). When the VIM 60 secures resources of server apparatuses and switches configuring physical resources, the NFVO 40 defines slices for these physical resources.

In addition, when the VIM 60 is caused to secure physical resources, NFVO 40 stores information defining a slice for the physical resources in a table stored by the NFVO 40. Then, the NFVO 40 requests the VNFM 50 to install software for realizing functions required for the service. In response to the installation request, the VNFM 50 installs the software described above to the physical resources (a node such as a server apparatus, a switch device, or a router device) secured by the VIM 60.

When the software is installed by the VNFM 50, the NFVO 40 performs mapping between a slice and a service in the table stored by the NFVO 40. Slices SL1 to SL3 are slices that are units for assigning services.

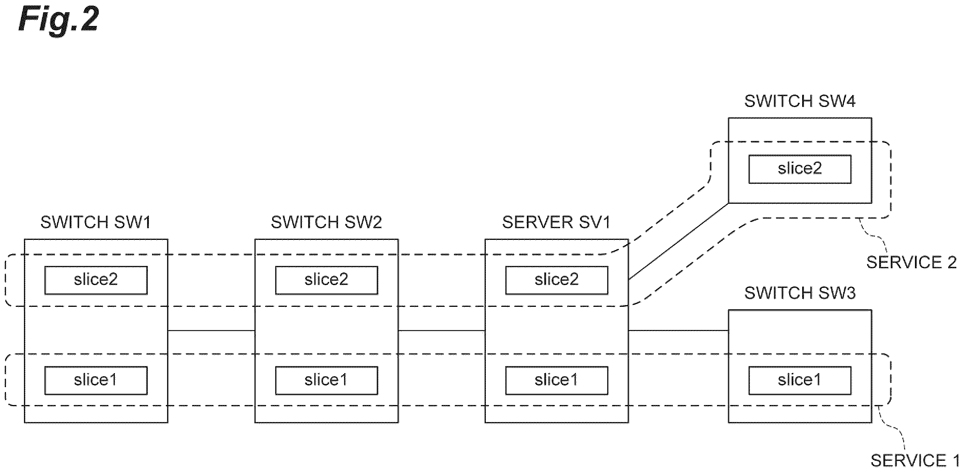

For example, as illustrated in Fig. 2, when the NFVO 40 requests the VIM 60 to secure resources for slices (Slice 1 and Slice 2), the VIM 60 gives an instruction indicating such a request to a switch SW1, a switch SW2, a server SV1, and a switch SW3. Then, the switch SW1, the switch SW2, the server SV1, and the switch SW3 secure resources for the slice 1. Similarly, in accordance with an instruction from the VIM 60, the switch SW1, the switch SW2, the server SV1, and the switch SW4 secure resources for the slice 2.

The NFVI 160 that is the physical resource described above represents a network that is formed from physical resources (a node group) configuring a virtualized environment. Conceptually, these physical resources include calculation resources, storage resources, and transmission resources. More specifically, these physical resources are configured to include nodes such as a physical server that is a physical server apparatus performing a communication process in the system, a switch, and the like. The physical server is configured to include a CPU (a core; a processor), a memory, and a storage means such as a hard disk. Generally, a plurality of nodes such as a physical server configuring the NFVI 160 and the like are arranged together at a base such as a data center (DC). In the data center, the arranged physical servers are connected through an internal network of the data center and are configured to be able to transmit/receive information to/from each other. In addition, a plurality of data centers are disposed in the system. The data centers are connected through a network, and physical servers disposed at different data centers can transmit/receive information to/from each other through the network.

As described above, by adding various functions to the NFVI 160 that becomes a physical resource (node) using the VNFM 50, the NFVI 160 realizes the functions of the HSS 70, the DNS server 80, the MME 90, the SGW 110, and the PGW 120.

The HSS 70 has a function of managing subscriber information including contract information of communication terminals such as the UE 130, authentication information, communication service information, terminal type information, and presence-in-area information as a database. Here, the communication service information is information that defines a type of communication service used by each UE 130. In the communication service information, information used for identifying a UE 130 (for example, an international mobile subscriber identity (IMSI)) and a service parameter representing requirements of a communication service used by the UE 130 are included. In addition, as will be described later, the HSS 70 stores a user ID and information representing a service used by the UE 130 indicated by the user ID.

The DNS server 80 has a function of managing a correspondence relation between a domain name or a host name and an IP address on the network. Furthermore, the DNS server 80 stores information in which information used for identifying a slice (for example, a slice ID) and an address of the SGW 110 are associated with each other. When a request for transmitting an address is received from the slice management device 10, the DNS server 80 transmits an address of the SGW 110 according to the request to the MME 90.

The MME 90 has a function of performing position management and authentication control of a user terminal (UE 130) that is present in a Long Term Evolution (LTE) network and a process of setting a communication path of user data between the SGW 110 and the UE 130. In other words, the MME 90 is a communication device that is communicatively connected to the UE 130.

In addition, when a user ID and an address of the SGW 110 for which a bearer needs to be established are received from the slice management device 10, the MME 90 stores information in which the user ID and the address of the SGW 110 are associated with each other and performs a bearer establishment process using the information. For example, when an attachment request is received from the user ID, the MME 90 requests a connection destination corresponding to the correspondence information to establish a bearer. In addition, instead of receiving an address of the SGW 110 from the slice management device 10, by receiving a slice ID and transmitting the slice ID to the DNS server 80 and requesting acquisition of an address of an SGW 110 corresponding to the slice ID (an SGW 110 for which a bearer needs to be established for using a slice represented by the slice ID), the MME 90 may acquire the address of the SGW 110 from the DNS server 80.

The eNB 100 is a radio base station connected to the MME 90 and a device having a radio access control function.

The SGW 110 transmits and receives user data used for providing a communication service for communicating with a packet data network gateway (PGW) 120 using a function of a presence-in-area packet exchanges that houses the LTE. A plurality of SGWs 110 are disposed in correspondence with requirements of a plurality of communication services.

The PGW 120 is a junction with a packet data network (PDN) and is a gateway that performs assignment of an IP address, transmission of a packet to the SGW 110, and the like.

The UE 130 is used by a user and, for example, is realized as a device having a communication function such as a mobile phone or a personal digital assistance (PDA). In addition, the UE 130 has a function of positioning the position of the UE 130. More specifically, the UE 130 communicates with the eNB 100 and acquires a cell ID representing a cell in which the UE 130 is present. When the cell ID is acquired, the UE 130 acquires a time at which the cell ID has been acquired by referring to a system clock. The UE 130 transmits the cell ID, the time at which the cell ID has been acquired, and the user ID stored in advance to the slice management device 10.

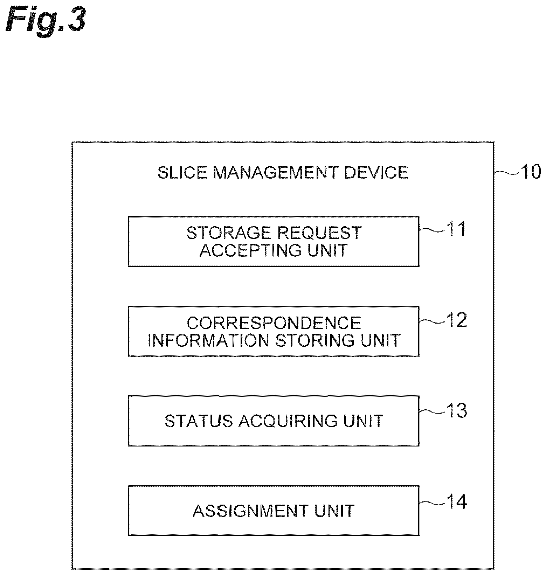

Subsequently, the function of the slice management device 10 relating to this embodiment will be described with reference to Fig. 3.

Referring back to Fig. 3, the function of the slice management device 10 will be described. As illustrated in Fig. 3, the slice management device 10 includes a storage request accepting unit 11, a correspondence information storing unit 12, a status acquiring unit 13, and an assignment unit 14.

The storage request accepting unit 11 is a part that receives correspondence information from the OSS/BSS 30 and accepts a storage request for storing correspondence information. When a storage request for storing correspondence information is received from the OSS/BSS 30 and receives the correspondence information, the storage request accepting unit 11 stores the correspondence information in the correspondence information storing unit 12 and transmits the correspondence information to the status acquiring unit 13. In this way, the storage request accepting unit 11 acquires new correspondence information.

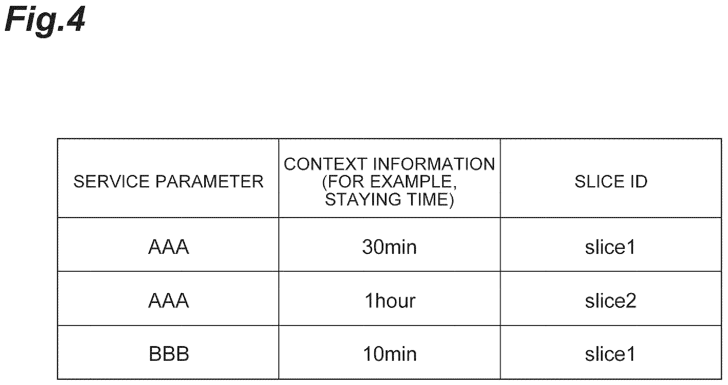

The correspondence information storing unit 12 is a part that stores correspondence information. Fig. 4 illustrates a correspondence information table. As illustrated in Fig. 4, the correspondence information table stores information in which a "service parameter" field, a "context information" field, and a "slice ID" field are associated with each other. Here, information of the "service parameter" field, the "context information" field, and the "slice ID" field is information received from the OSS/BSS 30. In the example illustrated in Fig. 4, a service parameter "AAA" input to the "service parameter" field, context information (information representing a user status) "30 min (30 minutes)" input to the "context information" field, and a slice of which the "slice ID" is "Slice 1" are associated with each other. In other words, in the case of the context information "30 min", when the service parameter is "AAA", it is represented that the slice ID "Slice 1" is assigned. The slice ID described above becomes a slice ID of the assignment destination. In addition, assigning a slice to a service represents that the service is caused to be in a usable state using the slice. Causing a service to be in a usable state using a slice includes establishment of a bearer for using a slice (for example, requesting the MME 90 to establish a bearer) and the like.

The status acquiring unit 13 is a part that acquires information representing a status of the UE 130. Here, the status of the UE 130 represents a state (for example, a staying time) of the UE 130 that may be estimated on the basis of a position, a speed, and the like of the UE 130. When positional information including a cell ID, a time, and a user ID is acquired from the UE 130, the status acquiring unit 13 generates or updates staying information (status information) on the basis of the acquired information. The staying information includes a user ID, a cell ID (a staying position), a staying time, and a staying start time. The user ID included in the staying information is an identifier that identifies a user. In addition, the cell ID is an identifier of a cell in which a user corresponding to the user ID is present. The staying time represents a time in which the user stays in a cell represented by the cell ID. The staying start time represents a time at which staying in a cell represented by the cell ID is started.

The status acquiring unit 13 determines whether or not staying information corresponding to the user ID and the cell ID included in the positional information is present. In a case in which staying information corresponding to the user ID and the cell ID included in the positional information is not present, the status acquiring unit 13 generates staying information in which the user ID included in the positional information is set as a user ID of the staying information, the cell ID included in the positional information is set as a cell ID of the staying information, a staying time of the staying information is set as "0," and the time included in the positional information is set as a staying start time.

In a case in which staying information corresponding to the user ID and the cell ID included in the positional information is present, the status acquiring unit 13 updates a staying time of the staying information corresponding to the user ID and the cell ID included in the positional information with a time according to a difference between the time included in the positional information and the staying start time of the staying information. In this way, the status acquiring unit 13 updates the staying information on the basis of the positional information acquired from the UE 130, thereby acquiring information representing a status of the user.

In addition, when correspondence information accepted by the storage request accepting unit 11 is acquired from the storage request accepting unit 11, the status acquiring unit 13 identifies staying information of which a staying time corresponds to the context information of the correspondence information. The status acquiring unit 13 transmits the user ID of the identified staying information to the HSS 70 and requests acquisition of a service parameter corresponding to the user ID.

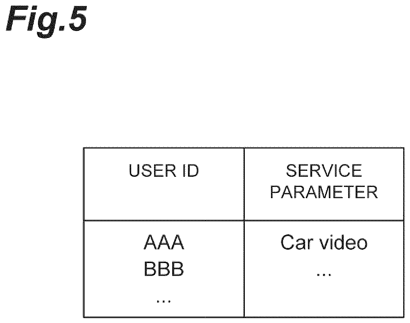

The HSS 70, as illustrated in Fig. 5, stores information in which a "user ID" field and a "service parameter" field are associated with each other. A user ID that is information used for identifying a user is input in the "user ID" field. A service parameter is input in the "service parameter" field. When a user ID is received from the slice management device 10, the HSS 70 transmits a service parameter corresponding to the user ID to the slice management device 10 by referring to the stored information.

The status acquiring unit 13 receives a service parameter transmitted by the HSS 70 and identifies a user ID of which the service parameter is the same as the service parameter of the correspondence information acquired from the storage request accepting unit 11. The status acquiring unit 13 transmits the identified user ID, the correspondence information, and information indicating that new correspondence information has been acquired to the assignment unit 14. In this way, with acquisition of new correspondence information as a trigger, the status acquiring unit 13 transmits the user ID, the correspondence information, and information indicating that the new correspondence information has been acquired to the assignment unit 14.

In addition, in a case in which the staying information is updated on the basis of positional information acquired from the UE 130, similar to the description presented above, the status acquiring unit 13 acquires a service parameter corresponding to the user ID from the HSS 70. The status acquiring unit 13 acquires correspondence information corresponding to the acquired service parameter and the staying time from the correspondence information storing unit 12. Subsequently, the status acquiring unit 13 transmits the user ID of the UE 130, the correspondence information, and information indicating that there has been a change in the staying time of the staying information to the assignment unit 14. In this way, with a change in the staying time of the staying information of the UE 130 as a trigger, the status acquiring unit 13 transmits the user ID, the correspondence information, and the information indicating that there has been a change in the staying time of the staying information of the UE 130 to the assignment unit 14.

The assignment unit 14 is a part that assigns a slice corresponding to the service used by the UE 130 and the staying time of the staying information specified by the status acquiring unit 13 on the basis of the correspondence information. In a case in which the user ID, the correspondence information, and the information indicating that new correspondence information has been acquired are acquired from the status acquiring unit 13, the assignment unit 14 acquires an address of an SGW 110 corresponding to the slice ID included in the acquired correspondence information from the DNS server 80.

In addition, in a case in which the user ID, the correspondence information, and the information indicating that there has been a change in the staying time of the staying information of the UE 130 are acquired from the status acquiring unit 13, the assignment unit 14 acquires an address of an SGW 110 corresponding to the slice ID included in the acquired correspondence information from the DNS server 80. The assignment unit 14 transmits the address of the SGW 110 and the user ID to the MME 90.

As described above, when the assignment unit 14 transmits the address of the SGW 110 and the user ID to the MME 90, the MME 90 establishes a bearer in the SGW 110 for the UE 130 of the user ID using a known technology.

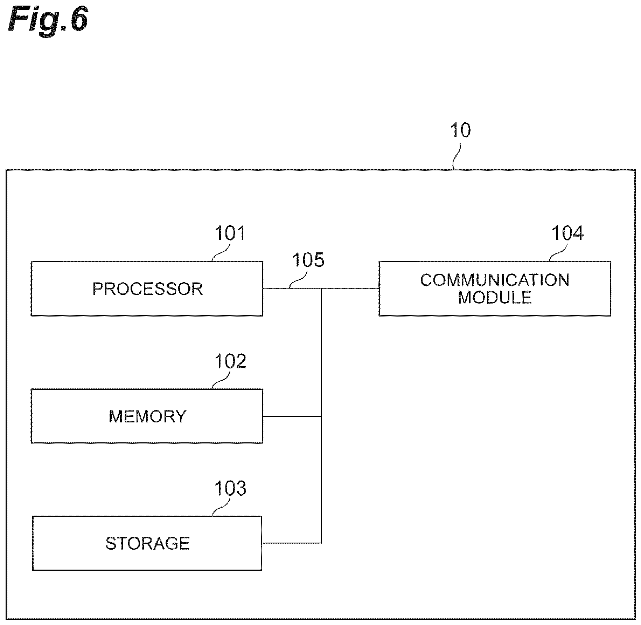

Next, Fig. 6 illustrates the hardware configuration of the slice management device 10 according to this embodiment. Functional blocks (constituent units) of the slice management device 10 is realized by an arbitrary combination of hardware and/or software. In addition, a realizing means of each of the functional blocks is not particularly limited. In other words, each of the functional blocks may be realized by one device that is combined physically and/or logically or may be realized by directly and/or indirectly (for example, using a wire and/or radiowaves) connecting two or more devices, which are physically and/or logically divided and using a plurality of the devices.

For example, the slice management device 10 and the like according to one embodiment of the present invention may function as a computer managing slices. The slice management device 10 described above may be configured physically as a computer device including a processor 101, a memory 102, a storage 103, a communication module 104, and the like.

In addition, in the following description, a term "device" may be rephrased with a circuit, a device, a unit, or the like. The hardware configuration of the slice management device 10 may be configured to include one or a plurality of devices illustrated in the drawing or may be configured not to include some devices.

Each function of the slice management device 10 is realized by causing the processor 101 to perform an arithmetic operation by causing predetermined software (program) to be read on hardware such as the processor 101 or the memory 102 and controlling communication using the communication module 104 and data read and/or write for the memory 102 and the storage 103.

The processor 101, for example, controls the entire computer by operating an operating system. The processor 101 may be configured using a central processing unit (CPU) including an interface for a peripheral device, a control device, an arithmetic operation device, a register, and the like. For example, the storage request accepting unit 11, the status acquiring unit 13, the assignment unit 14, and the like may be realized using the processor 101.

In addition, the processor 101 reads a program (program code), a software module, and data from the storage 103 and/or the communication module 104 into the memory 102 and executes various processes in accordance therewith. As the program, a program causing a computer to execute at least some of the operations described in the embodiment described above is used. For example, the slice management device 10 may be realized by a control program that is stored in the memory 102 and is operated by the processor 101, and the other functional blocks may be similarly realized. While various processes described above have been described as being executed by one processor 101, the processes may be executed by two or more processors 101 simultaneously or sequentially. The processor 101 may be mounted using one or more chips. In addition, the program may be transmitted from a network through a telecommunication line.

The memory 102 is a computer-readable recording medium and, for example, may be configured by at least one of a read only memory (ROM), an erasable programmable ROM (EPROM), an electrically erasable programmable ROM (EEPROM), a random access memory (RAM), and the like. The memory 102 may be referred to as a register, a cache, a main memory (a main storage device), or the like. The memory 102 can store a program (a program code), a software module, and the like executable for performing a radio communication method according to one embodiment of the present invention.

The storage 103 is a computer-readable recording medium and, for example, may be configured by at least one of an optical disc such as a compact disc ROM (CD-ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, a magnetic strip, and the like. The storage 103 may be referred to as an auxiliary storage device. The storage medium described above, for example, may be a database including the memory 102 and/or storage 103, a server, or any other appropriate medium.

The communication module 104 is hardware (a transmission/reception device) for performing inter-computer communication through a wired and/or wireless network and, for example, may be called also as a network device, a network controller, a network card, or the like.

In addition, each device such as the processor 101 or the memory 102 is connected to a bus 105 for communication of information. The bus 105 may be configured as a single bus or buses different between devices.

In addition, the slice management device 10 may be configured to include hardware such as a microprocessor, a digital signal processor (DSP), an application specific integrated circuit (ASIC), a programmable logic device (PLD), a field programmable gate array (FPGA), or the like, and a part or the whole of each functional block may be realized by the hardware. For example, the processor 101 may be mounted using at least one of such hardware components. The configuration of the slice management device 10 according to this embodiment has been described as above.

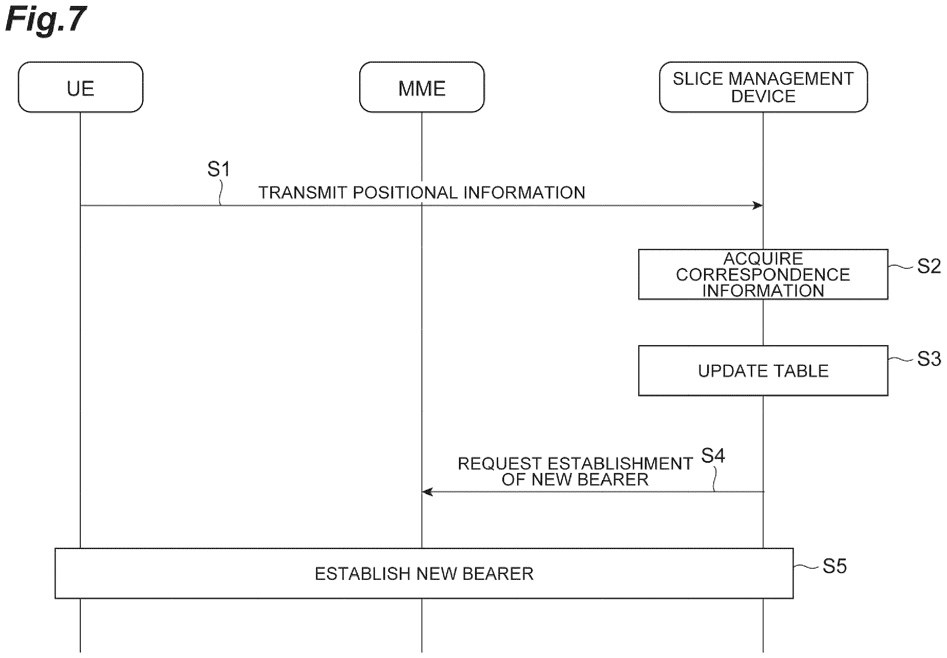

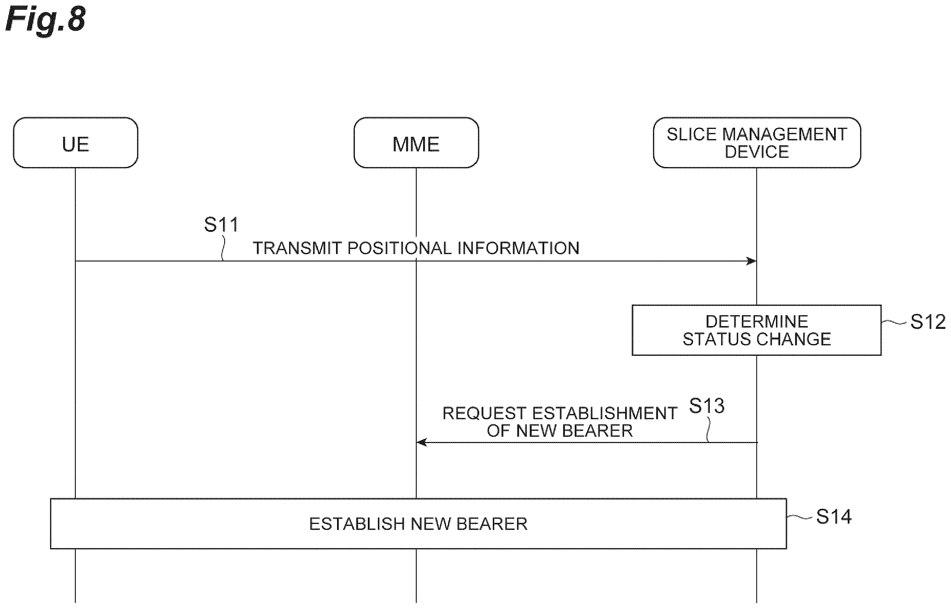

Subsequently, processes executed by the system according to this embodiment will be described with reference to sequence diagrams illustrated in Figs. 7 and 8. Fig. 7 is a sequence diagram of a process triggered upon new acquisition of correspondence information. Fig. 8 is a sequence diagram illustrating a process being triggered upon a change in the staying time of the staying information of the UE 130. First, description will be presented with reference to Fig. 7.

First, at a predetermined timing (for example, at predetermined time intervals or the like), the status acquiring unit 13 of the slice management device 10 acquires positional information from the UE 130 (Step S1) and generates or updates the staying information using the acquired positional information. In addition, the storage request accepting unit 11 acquires correspondence information from the OSS/BSS 30 (Step S2). Subsequently, the storage request accepting unit 11 stores the correspondence information described above in the correspondence information storing unit 12 (Step S3). Subsequently, the status acquiring unit 13 identifies staying information corresponding to context information included in the acquired correspondence information and extracts a user ID of the staying information. The assignment unit 14 of the slice management device 10 transmits an address of an SGW 110 corresponding to the slice ID of the correspondence information and the user ID to the MME 90 and newly requests bearer establishment (Step S4). The MME 90 newly establishes a bearer (Step S5).

Next, a process triggered upon a change in the staying time of the staying information of the UE 130 will be described with reference to Fig.8. At a predetermined timing (for example, at predetermined time intervals or the like), the status acquiring unit 13 of the slice management device 10 acquires positional information from the UE 130 (Step S11) and generates or updates the staying information using the acquired positional information. In a case in which the staying information is updated on the basis of the positional information acquired from the UE 130, similar to the description presented above, a service parameter corresponding to the user ID is acquired from the HSS 70. The status acquiring unit 13 acquires correspondence information corresponding to the acquired service parameter and the staying time described above from the correspondence information storing unit 12. In this way, the status acquiring unit 13 determines whether or not there is a change in the staying time of the staying information based on the positional information of the UE 130 (Step S12). The assignment unit 14 transmits the user ID and the correspondence information to the MME 90 and newly requests bearer establishment (Step S13). The MME 90 newly establishes a bearer (Step S14).

In the embodiment described above, a case in which a service parameter is associated with tracking areas has been described. Instead of this service parameter, information that can identify a service such as a UE usage type, a service type, an access point name (APN), or a dedicated core network (DCN) may be used. For example, the service parameter described above may be replaced with information in which a service type and an APN are associated with other or information in which a service type and a DCN ID are associated with each other.

In the embodiment described above, a case in which the staying time is set as information representing a status of a user has been described. Instead of this, information representing the position of the UE 130 may be set as information representing a status of a user. As the information representing the position of the UE 130, there are positional information representing a result of positioning performed by the UE 130 (for example, a result of positioning using a global positioning system (GPS) signal received by the UE 130), information representing a base station having an area in which the UE 130 is present, and information representing a sector in which the UE 130 is present. In this case, a slice can be assigned with characteristics of the position of the UE 130 taken into account. For example, a slice of a broadband can be assigned to a UE 130 positioned at a crowded place (a theme park or the like).

In the embodiment described above, a case in which the staying time is set as information representing a status of a user has been described. Instead of this, information representing whether or not the UE 130 is placed indoors may be set as information representing a status of a user. For example, it may be considered that the slice management device 10 stores information representing whether or not each sector is placed indoors in advance, the UE 130 determines whether or not the UE 130 is placed indoors on the basis of a sector in which the UE 130 is present and the stored information described above, and the UE 130 generates information representing whether or not the UE 130 is placed indoors using a result of the determination.

In addition, in the embodiment described above, a case in which the staying time is set as information representing a status of a user has been described. Instead of this, information representing a moving speed of the UE 130 may be set as information representing a status of a user. For example, it may be considered that the slice management device 10 acquires information representing a speed (a value measured using a speed sensor included in the UE 130) from the UE 130 as information representing a moving speed of the UE 130. In addition, it may be considered that the slice management device 10 generates information representing a speed on the basis of a switching frequency between sectors in which the UE 130 is present.

In addition, in the embodiment described above, a case in which the staying time is set as information representing a status of a user has been described. Instead of this, information representing whether or not the UE is present at a crowded place may be used. For example, it may be considered that the slice management device 10 acquires information of a sector in which each UE 130 is present from each UE 130, calculates the number of UEs 130 present in each sector, determines whether or not each sector is crowded on the basis of a result of the calculation, and generates information representing whether or not each UE 130 is present at a crowed place using a result of the determination.

In the embodiment described above, although a case in which the slice management device 10 is an independent device has been described, the slice management device 10 may be built in another device. For example, the MME 90 or the eNB 100 may function as the slice management device 10.

In addition, in the embodiment described above, a case in which the slice management device 10 requests the MME 90 to establish a bearer has been described. Instead of this, the slice management device 10 may request another device to establish a bearer. Examples of another device include a communication control device (common C-plane node) having the function of the MME 90 and a device (a C-plane node) that transmits and receives control signals using a control plane that is a path along which the control signals used for providing a communication service used by a UE 130 are transmitted.

Next, operations and effects of the system according to this embodiment will be described. In the slice management device 10, the storage request accepting unit 11 acquires correspondence information in which a service, a slice, and context information are associated with each other. The status acquiring unit 13 acquires positional information of the UE 130 and identifies staying information from the positional information. The assignment unit 14 assigns a slice corresponding to a service used by the UE 130 and context information represented by the correspondence information.

In this case, the slice management device 10 assigns a slice to the service in accordance with the context information such as the staying status and the like of the UE 130 and accordingly, a slice assigned to the service can be dynamically changed. For example, the slice management device 10 can assign a slice in accordance with the staying status of the UE 130 also in the same service. For example, in a case in which the UE is staying in a certain district (a district in which home or a company is present) for a predetermined period, a slice for which there is no mobility control may be assigned.

In addition, with acquisition of new correspondence information as a trigger, the slice management device 10 assigns a slice corresponding to a service used by the UE 130 and context information on the basis of the new correspondence information. In this case, a slice can be dynamically changed for the UE 130 corresponding to the context information of the new correspondence information.

In addition, with a change in the staying time of the staying information of the UE 130 as a trigger, the slice management device 10 assigns a slice based on a service used by the UE 130 and correspondence information after change to the service used by the UE 130 on the basis of the correspondence information, and accordingly, a slice based on the staying information can be assigned in accordance with the change in the staying time of the staying information. In other words, a slice can be dynamically changed.

In addition, the status acquiring unit 13 identifies a status of the UE 130 using information based on the position (positional information) of the UE 130. In this way, a slice that conforms to a status according to the position of the UE 130 can be assigned.

It is apparent that software, regardless whether it is called software, firmware, middleware, a microcode, a hardware description language, or any other name, be widely interpreted to mean a command, a command set, a code, a code segment, a program code, a program, a subprogram, a software module, an application, a software application, a software package, a routine, a subroutine, an object, an executable file, an execution thread, an order, a function, and the like.

In addition, software, a command, and the like may be transmitted and received via a transmission medium. For example, in a case in which software is transmitted from a website, a server, or any other remote source using wiring technologies such as a coaxial cable, an optical fiber cable, a twisted pair, a digital subscriber line (DSL) and the like and/or radio technologies such infrared rays, radio waves, and microwaves, and the like, such wiring technologies and/or radio technologies are included in the definition of the transmission medium.

Information, a signal, and the like described in this specification may be represented using any one among other various technologies. For example, data, an instruction, a command, information, a signal, a bit, a symbol, a chip, and the like described over the entire description presented above may be represented using a voltage, a current, radiowaves, a magnetic field or magnetic particles, an optical field or photons, or an arbitrary combination thereof.

In addition, a term described in this specification and/or a term that is necessary for understanding this specification may be substituted with terms having the same meaning or a meaning similar thereto.

Terms "system" and "network" used in this specification are compatibly used.

In addition, information, a parameter, and the like described in this specification may be represented using absolute values, relative values from predetermined values, or other corresponding information. For example, radio resources may be instructed using indices.

Terms such as "determining" used in this specification includes various operations of various types. The "determining," for example, may include a case in which judging, calculating, computing, processing, deriving, investigating, looking up (for example, looking up a table, a database, or any other data structure), or ascertaining is regarded as "determining." In addition, "determining" may include a case in which receiving (for example, receiving information), transmitting (for example, transmitting information), input, output, or accessing (for example, accessing data in a memory) is regarded as "determining." Furthermore, "determining" may include a case in which resolving, selecting, choosing, establishing, comparing, or the like is regarded as "determining." In other words, "determining" includes a case in which a certain operation is regarded as "determining."

Description of "on the basis of' used in this specification does not mean "only on the basis of' unless otherwise mentioned. In other words, description of "on the basis of' means both "only on the basis of' and "at least on the basis of."

In addition, a "means" in the configuration of each device described above may be replaced with a "unit," a "circuit," a "device," or the like.

As long as "including," "comprising," and modifications thereof are used in this specification or the claims, such terms are intended to be inclusive like a term "comprising." In addition, a term "or" used in this specification or the claims is intended to be not an exclusive logical sum.

In the entire disclosure, for example, in a case in which articles such as "a," "an" and "the" in English are added through translation, as long as such articles are not clear on the basis of the context, those include plural forms.

Each aspect/embodiment described in this specification may be applied to long term evolution (LTE), LTE-advanced (LTE-A), Super 3G, IMT-advanced, 4G, 5G, future ratio access (FRA), W-CDMA (Registered trademark), GSM (registered trademark), CDMA 2000, ultra mobile broadband (UMB), IEEE 802.11 (Wi-Fi), IEEE 802.16 (WiMAX), IEEE 802.20, ultra-wideband (UWB), Bluetooth (registered trademark), a system using another appropriate system and/or a next generation system extended based on these.

The processing order, the sequence, the flowchart, and the like of each aspect/embodiment described in this specification may be changed in order as long as there is no contradiction. For example, in a method described in this specification, elements of various steps are presented in an exemplary order, and the method is not limited to the presented specific order.

The input/output information and the like may be stored in a specific place (for example, a memory) or managed using a management table. The input/output information and the like may be overwritten, updated, or additionally written. The output information and the like may be deleted. The input information and the like may be deleted. The input/output information and the like may be transmitted to another device.

The aspects/embodiments described in this specification may be individually used, used in combination, or be switched therebetween in accordance with execution. In addition, a notification of predetermined information (for example, a notification of "being X") is not limited to be performed explicitly and may be performed implicitly (for example, a notification of the predetermined information is not performed).

In the entire present disclosure, not so long as being a single is clearly represented, both being a single and being two or more are included.

As above, while this embodiment has been described in detail, it is apparent to persons skilled in the art that this embodiment is not limited to the embodiments described in this specification. This embodiment can be performed as a modified and changed aspect without departing from the concept and the scope of the present invention defined by the claims. Thus, description of this specification is for the purpose of exemplary description and does not have any meaning for limiting this embodiment.

### Reference Signs List

10 Slice management device
11 Storage request accepting unit
12 Correspondence information storing unit
13 Status acquiring unit
14 Assignment unit
20 SO
30 OSS/BSS
40 NFVO
50 VNFM
60 VIM
70 HSS
80 DNS server
90 MME
100 eNB
101 Processor
102 Memory
103 Storage
104 Communication module
105 Bus
110 SGW
120 PGW
130 UE
160 NFVI

## Claims

1. A slice assignment method executed by a device assigning a slice that is a virtual network generated on a network infrastructure to a service using the virtual network, the slice assignment method comprising:
a correspondence information acquiring step of acquiring correspondence information that is information in which the service, the slice of an assignment destination of the service, and status information that is information representing a status of a terminal are associated with each other;
a status acquiring step of acquiring the status information of the terminal; and
an assignment step of assigning the slice corresponding to the service used by the terminal and the status information acquired in the status acquiring step on the basis of the correspondence information acquired in the correspondence information acquiring step.

2. The slice assignment method according to claim 1, wherein, in the assignment step, the device assigns the slice corresponding to the service used by the terminal and the status information acquired in the status acquiring step on the basis of new correspondence information with acquisition of the new correspondence information in the correspondence information acquiring step as a trigger.

3. The slice assignment method according to claim 1, wherein, in the assignment step, the device assigns the slice corresponding to the service used by the terminal and the status information after change on the basis of the correspondence information acquired in the correspondence information acquiring step with a change in the status information acquired in the status acquiring step as a trigger.

4. The slice assignment method according to any one of claims 1 to 3, wherein, in the status acquiring step, the status information of the terminal based on information based on a position of the terminal is acquired.
